# EUROPEAN PATENT APPLICATION

(11) **EP 4 295 995 A1**
(43) Date of publication of application: **27.12.2023**
(21) Application number: 22180026.1
(22) Date of filing: 21.06.2022
(51) Int. Cl.: B23Q 1/01, B23Q 1/54, B23Q 1/56, B23Q 39/02

(54) **MACHINING SYSTEM AND METHOD OF OPERATING THE MACHINING SYSTEM**

(71) Applicant: Isochronic AG, 1026 Denges (CH)
(72) Inventor: Haas, Melvin, 1095 Lutry (CH); Buchs, Pierre-Alain, 1432 Belmont-sur-Yverdon (CH); Lindner, Albrecht, 1110 Morges (CH)
(74) Representative: P&TS SA (AG, Ltd.)

(57) **Abstract**

The present invention relates to a machining system (10) comprising a workpiece support (60) adapted to receive and support at least one workpiece (100) to be machined, and a machining head mechanism (20) arranged to move a first and a second machining head (30a, 30b) relative to the workpiece support (60). The machining head mechanism (20) comprises a transverse beam (22) extending above the workpiece support (60), and a transverse beam transport mechanism (50) adapted to move at least one of a first and a second end part (26a, 26b) of the transverse beam (22) along a linear direction X. The first and second machining heads are mounted on respectively a first and a second head holder. The machining system (10) further comprises a linear transport mechanism to displace the first and second head holder (32a, 32b) along respective opposite longitudinal sides (24a, 24b) of the transverse beam (12) to move the first and second machining heads (30a, 30b) therealong, and a controller configured to control the displacement of said first and second machining heads (30a, 30b) independently from each other such that a different sequence of movement can be imparted to each machining head (30a, 30b).

## Description

### Field of the invention

The present invention relates to a machining system for machining one or more workpieces simultaneously, for example by cutting, milling, drilling, grinding or water jet cutting one or more workpieces. The present invention also relates to a method of operating the machining system.

### Description of related art

There are a variety of machining systems commonly in use. Among them are lathes, mills, routers and grinders. More recently, such machines have taken the form of CNC (Computer Numerical Control) machines, which are computer controlled for high precision. Such machines typically operate continuously for a substantial period of time, according to how they have been programmed. This contrasts with a traditional machine being operated by a person, which may make one cut, grind, etc., and then be stopped and repositioned by the operator for the next operation.

US2020398389A1 discloses a CNC machine comprising a tool spindle for holding and actuating a tool, a compound support frame comprising an X-direction support frame for guiding movement of the tool in an X-direction, a Y-direction support frame for guiding movement of the tool in a Y-direction and a Z-direction support frame for guiding movement of the tool in a Z-direction. The X-direction support frame, Y-direction support frame and Z-direction support frame are operatively coupled to the tool spindle, and mutually positioned to support the tool spindle and tool, and mutually operatively coupled to guide the tool to a three-dimensional range of operating positions.

A major disadvantage of the above-mentioned CNC machine results from the constraint of movement of the spindle since the latter can only be moved along two orthogonal axes, which considerably reduces the versatility of machining operations. In addition, this CNC machine is adapted to impart movement to only one tool spindle which may have a negative impact of the machine through-put.

CN108080968 discloses a machining system comprising a base and a transverse beam positioned above the base. Two machining heads are mounted to slide independently from each other along two opposite sides of the transverse beam. The base of the machining system comprises a first and a second component holder which can slidably be actuated independently from each other along respective first and second Y-axis rails that extend parallely from each other on both sides of the transverse beam.

The machining system has also the disadvantage to constrain the movement of the two machining heads along the opposite sides of the tranverse beam, which remains fixed during machining operation which reduces the versatility of machining operations.

### Brief summary of the invention

An aim of the present invention is therefore to provide a machining system that is more versatile.

Another aim of the present invention is to provide a machining system with high throughput.

A further aim of the present invention is to provide a method of operating the machining system to perform machining operations on a workpiece which are not achievable with conventional machining systems described above.

These aims are achieved notably by a machining system comprising a workpiece support adapted to receive and support at least one workpiece to be machined, and a machining head mechanism arranged to move a first and a second machining head relative to the workpiece support. The machining head mechanism comprises a transverse beam extending above the workpiece support, and a transverse beam transport mechanism adapted to move at least one of a first and a second end part of the transverse beam along a linear direction X. The first and second machining heads are mounted on respectively a first and a second head holder. The machining system further comprises a linear transport mechanism to displace the first and second head holder along respective opposite longitudinal sides of the transverse beam to move the first and second machining heads therealong, and a controller configured to control the displacement of said first and second machining heads independently from each other such that a different sequence of movement can be imparted to each machining head.

In an embodiment, the transverse beam transport mechanism is adapted to move the first and second end parts of the transverse beam independently from each other along the linear direction X.

In an embodiment, the machining head mechanism comprises a first and a second beam support pivotally mounted on respective first and second end parts of the transverse beam. The transverse beam transport mechanism is arranged to move the first and second beam support on both sides of the workpiece support along said linear direction.

In an embodiment, one of the first and second beam supports comprises a slider slidably engaged with a rail extending along an oblique direction to said linear direction, preferably along an orthogonal direction, to said linear direction. The transverse beam is connected or forms an integral part with a stand engaged with the transverse beam transport mechanism to move the stand along said linear direction.

In an embodiment, the workpiece support is fixed relative to the machining head mechanism.

In an embodiment, the workpiece support is part of a transport system arranged to move the at least one workpiece in at least one linear direction (X or Y) and/or rotation around the X, Y or Z axis.

In an embodiment, the linear transport mechanism comprises a first and a second belt connected respectively to the first and second holders of respective first and second machining head.

In an embodiment, the linear transport mechanism comprises a first and a second ball screw comprising each a threaded shaft arranged next to each other inside the transverse beam and a ball nut arranged to be connected to respective first and second holder through a longitudinal slot or opening extending along both opposite longitudinal sides of the transverse beam.

In an embodiment, the linear transport mechanism comprises a linear motor having a stator comprising a single permanent magnet assembly without any central ferromagnetic core, formed of a row of juxtaposed magnetic segments. These juxtaposed segments may be for example of changing polarity. Each of the first and second head holders comprises an electromagnet connected respectively to a first and a second controller and coupling electromagnetically the permanent magnet assembly.

In an embodiment, each of the first and second machining heads are arranged to be actuable in a Z-direction relative to respective first and second head holders.

In an embodiment, the machining system comprises at least two machining head mechanisms comprising each a transverse beam extending above the workpiece support, and a first and a second machining head slidably mounted against opposite longitudinal sides of each transverse beam.

In an embodiment, each of the first and second machining heads is a laser end effector, an end mill, a drill or a water jet cutter.

In an embodiment, the at least one workpiece is in metal, for example a metal sheet, in paper, in cardboard, in stone such as granite, in leather or in textile.

Another aspect of the invention relates to a method of machining a workpiece with the machining system. The method comprises the step of simultaneously controlling
- linear movement of respective first and second machining heads along respective opposite longitudinal sides of the transverse beam, and
- rotational movement of respective first and second end parts of the transverse beam relative to respective first and second transverse beam support.

Each machining head performs a machining operation on said at least one workpiece according to a different trajectory of respective machining head.

### Brief Description of the Drawings

The invention will be better understood with the aid of the description of embodiment given by way of examples and illustrated by the figures, in which:
- Figure 1 shows a schematic simplified perspective view of a machining system comprising a machining head mechanism and a workpiece support, whereby a transverse beam of the machining head mechanism extends above the workpiece support in a first position;
- Figure 2 shows another schematic simplified perspective view of the machining system of Figure 1 from another angle,
- Figure 3 shows a similar view of Figure 1, whereby the transverse beam of the machining head mechanism is tilted in a second position,
- Figure 4 shows the machining head mechanism of the machining system of Figures 1 to 3;
- Figure 5 shows a top view of Figure 3,
- Figure 6 shows an elevation view of Figure 3, and
- Figures 7a to 7c show different schematic views of the independent kinematic of two machining heads mounted on the transverse beam.

### Detailed description of possible embodiments of the invention

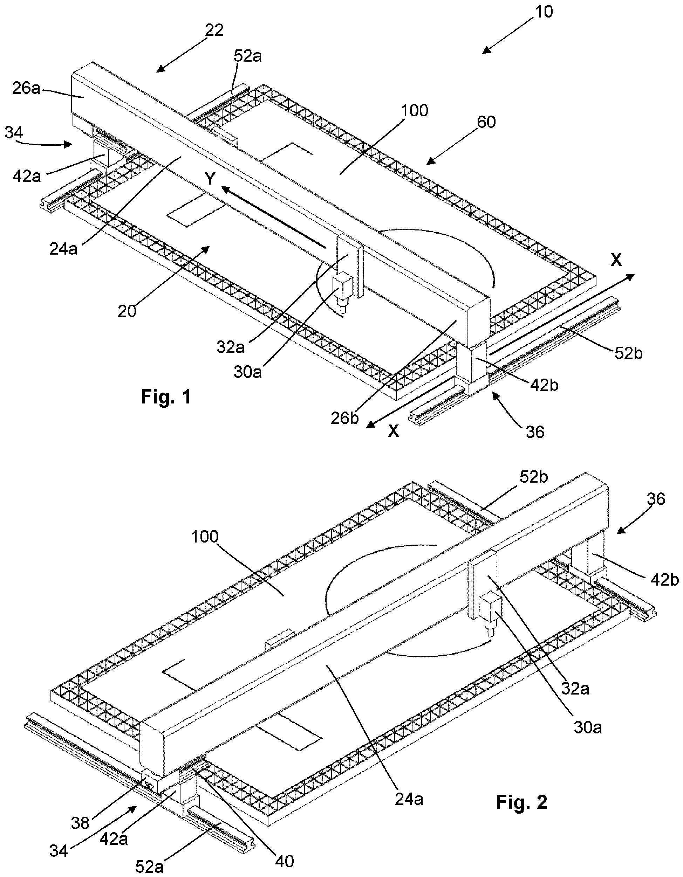

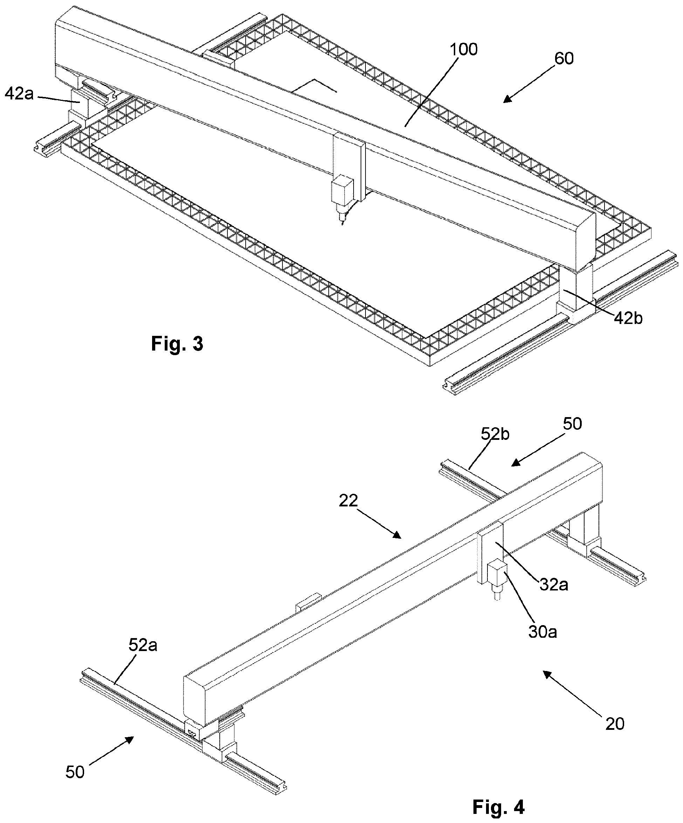

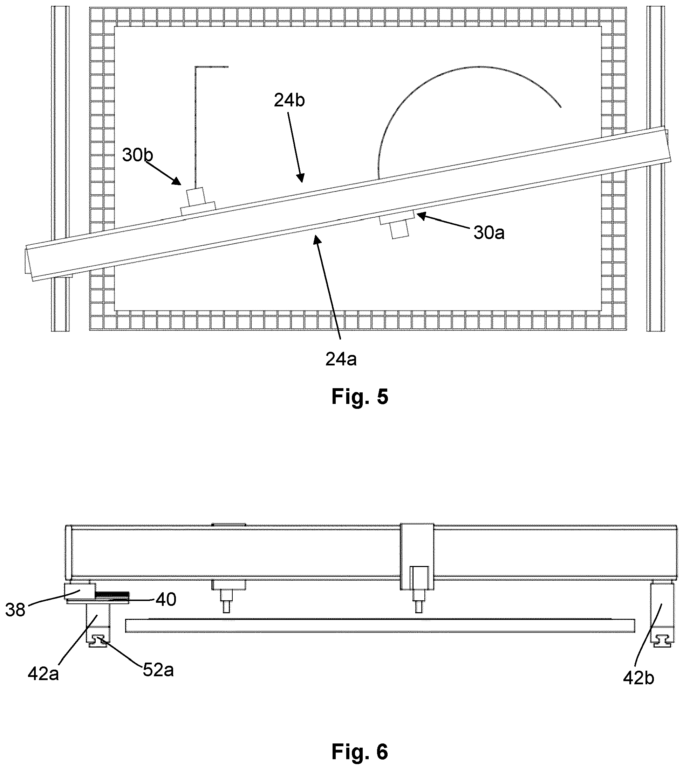

With reference to Figures 1 to 5, the machining system 10 comprises a workpiece support 60 and a machining head mechanism 20 to move machining heads 30a, 30b (Figure 5) relative to the workpiece support 60. The workpiece support 60 is adapted to receive and to support a workpiece 100 to be machined, for example a metal sheet in the illustrated embodiment. In an embodiment, the workpiece support 60 remains fixed relative to the machining head mechanism 20. In another non-illustrated embodiment, the workpiece support 60 may be part of a conveyor transport system to move the workpiece 100 to be machined in a conveying direction X.

The machining head mechanism 20 comprises a transverse beam 22 extending across the workpiece support 60 as well as a first and a second machining heads 30a. 30b. The first machining head 30a is mounted on a first head holder 32a slidably engaged with a first longitudinal side 24a of the transverse beam 22 so that the first machining head 30a can be moved back-and-forth along this first longitudinal side. The second machining head 30b is mounted on a second head holder 32b slidably engaged with a second longitudinal side 24b of the transverse beam 22, opposite the first longitudinal side, so that the second machining head 30b can be moved back-and-forth along this second longitudinal side.

The first and second machining head 30a, 30b of the machining head mechanism 20 are arranged to be controlled independently from each other so as to perform different machining operations on a same workpiece 100 or on two or more workpieces disposed next to each other on the workpiece support 60.

To this end, the machining system 10 comprises a linear transport mechanism (not shown) arranged to displace the first and second head holders 32a, 32b along respective opposite longitudinal sides 24a, 24b of the transverse beam 22. The linear transport mechanism comprises two independent actuators to impart a linear movement to respective first and second head holders 32a, 32b such that these head holders 32a, 32b can be moved independently from each other along respective opposite longitudinal sides 24a, 24b of the transverse beam 22.

In an embodiment (not shown), the linear transport mechanism comprises pulleys which may be for example pivotally mounted on a first and second end part of the transverse beam as well as a first and a second belt brought in motion by the rotation of the corresponding pulleys. The pulleys supporting the first belt may be actuated in rotation independently from the pulleys supporting the second belt. The first and second holders of respective first and second machining head are connected to respective first and second pulley to control the position of the probe head independently from each other.

In another non-illustrated embodiment, the linear transport mechanism comprises a first and a second ball screw comprising each a threaded shaft arranged next to each other inside the transverse beam. A first ball is mounted on one of the two threaded shafts and is connected to one of the two head holders through a longitudinal slot or opening extending along a first longitudinal side of the transverse beam. A second ball is mounted on the other of the two threaded shafts and is connected to the other of the two head holders through a longitudinal slot or opening extending along a second longitudinal side of the transverse beam.

In a further non-illustrated embodiment, the machining head mechanism 20 comprises a linear motor mounted on the transverse beam 22. The stator of each linear motor is integrated to the transverse beam while the first and second head holders 30a, 30b comprise the primary part of respective linear motor.

In an advantageous embodiment, the linear transport mechanism comprises a double-sided linear motor as disclosed in European patent application n°21180406.7, which fall under Art 54(3) EPC.

As shown in Figures 1 and 2, respective end parts 26a, 26b of the transverse beam 22 are pivotally coupled to a first and a second transverse beam supports 34, 36 which are arranged to move along two opposite sides of the workpiece support 60 in a linear direction X. One beam support 34 comprises a slider 38 having a pivot fitted in one end part 26a of the transverse beam 22, a rail 40 extending along an oblique direction to the linear direction X, preferably along an orthogonal Y direction to the linear direction X. The rail 40 is, on the one hand, slidably engaged with the slider 38 and, on the other hand, connected to a stand 42a. The latter is slidably engaged with a first linear rail 52a of a transverse beam linear transport mechanism 50. The other beam support 36 comprises a stand 42b having a pivot fitted on the other end part 26b of the transverse beam 22. The stand 42b is slidably engaged with a second linear rail 52b of the transverse beam transport mechanism 50.

The transverse beam transport mechanism 50 may have different configurations and may comprise for example two linear motors (not shown) to impart a linear movement to respective stands 42a, 42b of the machining head mechanism 20 along both sides of the workpiece support 60. In an alternative non-illustrated embodiment, the transverse beam transport mechanism 50 may comprise a first and a second ball screw with a first and a second threaded shaft arranged along both sides of the workpiece support 60. The first and second stands 42a, 42b of the machining head mechanism 20 are connected to respective ball of the first and second ball screws.

Each of the first and second machining heads 30a, 30b may be for example a laser end effector, an end mill, a drill or a water jet cutter to machine different type of workpieces of different materials, for example a metal workpiece such as a metal sheet 100, plastic components, paper sheet, cardboard, stone such as granite, leather or textile.

For applications using laser end effectors as machining heads, the laser system is typically not onboard of the machining system 10 but the laser's energy is transmitted via an optical light transmitting fibre which is ending on the machining heads.

In embodiments, a workpiece holder (not shown) is fixed to the workpiece support 60 to firmly hold the workpiece during machining.

In an embodiment, each of the first and second machining heads 30a, 30b are arranged to be actuable in a Z-direction relative to respective first and second head holders 30a, 30b, in particular when the machining heads are end mills or drills to provide a three-axis machining system.

The specific configuration of the machining system 10 according to the invention allow to implement methods of machining workpieces that are more versatile in terms of trajectory that can be imparted to machining head compared to the machining method performed by the prior art machining systems discussed in the background of the invention. The machining system 10 has also a higher through-put that these prior art machining systems.

The method of machining a workpiece with the machining system 10 comprises the step of simultaneously controlling
- linear movement of respective first and second machining heads 30a, 20b along respective opposite longitudinal sides 24a, 24b of the transverse beam 22 and,
- rotational movement of respective first and second end parts 26a, 26b of the transverse beam 22 relative to respective first and second transverse beam support 34, 36.

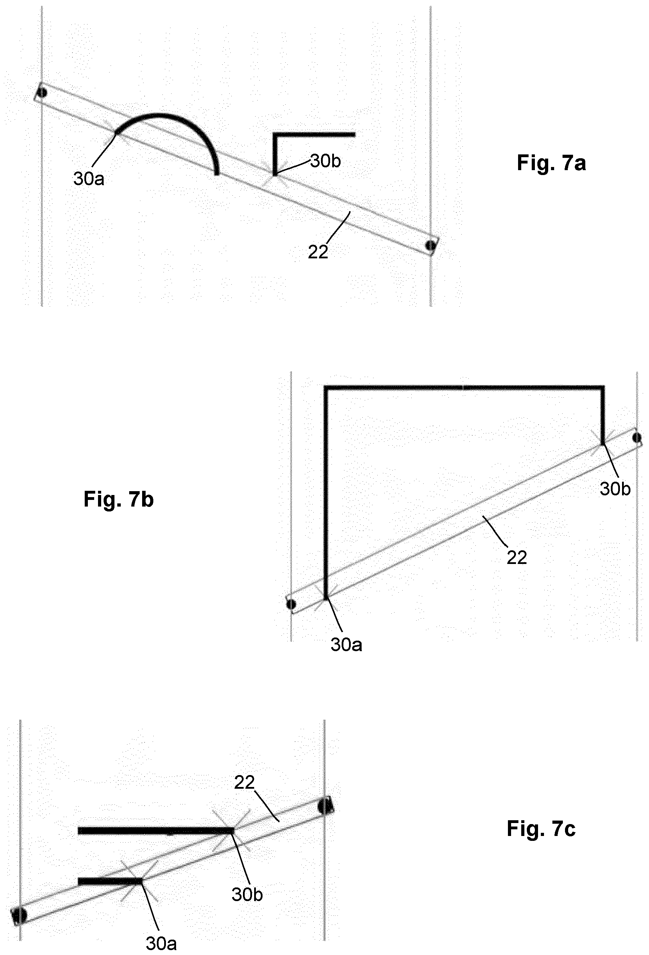

This ensures that each machining head 30a, 30b of the machining system 10 performs a machining operation on the at least one workpiece 100 according to a different trajectory of respective machining head 30a, 30b to obtain different machining trajectories as schematically shown in Figures 7a to 7c.

Various modifications and variations to the described embodiments of the invention will be apparent to those skilled in the art without departing from the scope of the invention as defined in the appended claims.

For example, the machining system may comprise not only one transverse beam with the two associated machining heads but at least two or more transverse beams with two additional machining heads for each additional transverse beam. Each transverse beam may comprise a dedicated transverse beam transport mechanism.

### Reference list

Machining system 10
   Machining head mechanism 20
      Transverse beam 22
         First and second opposite longitudinal sides 24a, 24b
         First and second end parts 26a, 26b
      First and second machining heads 30a, 30b
      First and second head holders 32a, 32b
      First and second transverse beam supports 34, 36
         Slider 38
         Rail 40
         Stands 42a, 42b
      Transverse beam transport mechanism 50
         First and second linear rails 52a, 52b
   Workpiece support 60 (e.g. conveyor transport system)
Workpiece 100 (e.g. metal sheet)

## Claims

1. Machining system (10) comprising a workpiece support (60) adapted to receive and support at least one workpiece (100) to be machined, a machining head mechanism (20) arranged to move a first and a second machining head (30a, 30b) relative to the workpiece support (60), the machining head mechanism (20) comprising a transverse beam (22) extending above the workpiece support (60), and a transverse beam transport mechanism (50) adapted to move at least one of a first and a second end part (26a, 26b) of the transverse beam (22) along a linear direction X, wherein the first and second machining heads (30a, 30b) are mounted on respectively a first and a second head holder (32a, 32b), the machining system (10) further comprises a linear transport mechanism to displace said first and second head holder (32a, 32b) along respective opposite longitudinal sides (24a, 24b) of the transverse beam (12) to move the first and second machining heads (30a, 30b) therealong, and a controller configured to control the displacement of said first and second machining heads (30a, 30b) independently from each other such that a different sequence of movement can be imparted to each machining head.

2. Machining system (10) according to claim 1, wherein the transverse beam transport mechanism (50) is adapted to move the first and second end parts (26a, 26b) of the transverse beam (22) independently from each other along said linear direction X.

3. Machining system (10) according to claim 1 or 2, wherein the machining head mechanism (20) comprises a first and a second beam support (34, 36) pivotally mounted on respective first and second end parts (26a, 26b) of the transverse beam (22), the transverse beam transport mechanism (50) being arranged to move said first and second beam support (34, 36) on both sides of the workpiece support (60) along said linear direction X.

4. Machining system (10) according to the preceding claim, wherein one of said first and second beam supports (34, 36) comprises a slider (38) slidably engaged with a rail (40) extending along an oblique direction to said linear direction X, preferably along an orthogonal direction Y, said slider (38) being connected or forming an integral part with a stand (42a) engaged with the transverse beam transport mechanism (50) to move said stand (42a) along said linear direction X.

5. Machining system (10) according to any of the preceding claims, wherein the workpiece support (60) is fixed relative to the machining head mechanism (20).

6. Machining system (10) according to any of claims 1 to 3, wherein the workpiece support (60) is part of a conveyor transport system arranged to move said at least one workpiece in said linear direction X.

7. Machining system (10) according to any preceding claim, wherein the linear transport mechanism comprises a first and a second belt connected respectively to the first and second holders (32a,32b) of respective first and second machining head (30a, 30b).

8. Machining system (10) according to any of claims 1 to 5, wherein the linear transport mechanism comprises a first and a second ball screw comprising each a threaded shaft arranged next to each other as part of the transverse beam (22) and a ball nut arranged to be connected to respective first and second holder (32a, 32b) through a longitudinal slot or opening extending along both opposite longitudinal sides (24a, 24b) of the transverse beam.

9. Machining system (10) according to any of claims 1 to 5, wherein the linear transport mechanism comprises a linear motor having a stator comprising a single permanent magnet assembly without any central ferromagnetic core, formed of a row of juxtaposed magnetic segments, and wherein each of said first and second head holders (22a, 22b) comprises an electromagnet connected respectively to a first and a second controller and coupling electromagnetically the permanent magnet assembly.

10. Machining system (10) according to any preceding claim, wherein each of said first and second machining heads (30a, 30b) are arranged to be actuable in a Z-direction relative to respective first and second head holders (32a, 32b).

11. Machining system (10) according to any preceding claim, comprising at least two machining head mechanisms comprising each a transverse beam extending above the workpiece support, and a first and a second machining head slidably mounted against opposite longitudinal sides of each transverse beam.

12. Machining system (10) according to any preceding claim, wherein each of the first and second machining heads (30a, 30b) is laser source, an end mill, a drill or a water jet cutter.

13. Machining system (10) according to any preceding claim, wherein said at least one workpiece (100) is in metal, for example a metal sheet, in paper, in cardboard, in stone such as granite, in leather or in textile.

14. Method of machining a workpiece with the machining system (10) according to any preceding claim, the method comprising the step of simultaneously controlling
- linear movement of respective first and second machining heads (30a, 20b) along respective opposite longitudinal sides of the transverse beam (22) and,
- rotational movement of respective first and second end parts (26a, 26b) of the transverse beam (22) relative to respective first and second transverse beam support (34, 36)
such that each machining head (30a, 30b) performs a machining operation on said at least one workpiece (100) according to a different trajectory of respective machining head.
